# EUROPEAN PATENT APPLICATION

(11) **EP 3 540 369 A1**
(43) Date of publication of application: **18.09.2019**
(21) Application number: 18741461.0
(22) Date of filing: 16.01.2018
(51) Int. Cl.: G01B 11/00, G01B 11/26

(54) **MARKER**

(30) Priority: 17.01.2017 JP 2017006091
(71) Applicant: Enplas Corporation, Kawaguchi-shi, Saitama 332-0034 (JP)
(72) Inventor: FUKUDA Yasuyuki, Kawaguchi-shi Saitama 332-0034 (JP)
(74) Representative: J A Kemp
(86) International application number: PCT/JP2018/001024
(87) International publication number: WO 2018/135491

(57) **Abstract**

The present invention provides a marker that can prevent reflection from the surface of the marker and can project an image with an excellent contrast. The marker (100) of the present invention includes a lens main body (110). The lens main body (110) has multiple lens portions (103) on one surface side and has multiple detectable portions (105) on the other surface side. The lens portions (103) are arranged successively in a planar two-dimensional direction. On the one surface, a pitch of the lens portions (103) in a one-dimensional direction is narrower than a pitch of the lens portions (103) in the other one-dimensional direction.

## Description

### TECHNICAL FIELD

The present invention relates to a marker.

### BACKGROUND ART

In the fields of augmented reality (also referred to as "AR" hereinafter), robotics, etc., a so-called visual marker is used to recognize the position, the orientation, and the like of an object. As an example of such a marker, there has been reported a marker that includes a lenticular lens arranged on a black stripe pattern and a marker that includes a lens array arranged on a black dot (Patent Literature 1).

When the surface of the marker is irradiated with light, an image projecting the stripe pattern or the dot appears on the surface. When the marker is recognized visually with a camera or the like, an projected image is detected as an image that moves or deforms depending on the viewing direction to the marker. Accordingly, the inclination angle of the marker and the viewing direction can be recognized from the detected image, and therefore, the position, the orientation, and the like of the object can be recognized as mentioned above.

### Citation List

### Patent Literature

Patent Literature 1: JP 2012-145559 A

### SUMMARY OF INVENTION

### Technical Problem

However, when an image appeared on the marker is checked, there are problems in that light is reflected from the surface of the marker, and contrast of the image is insufficient.

Hence, the present invention is intended to provide a marker that can prevent reflection from the surface of the marker and can project an image with an excellent contrast.

### Solution to Problem

In order to achieve the aforementioned object, the marker of the present invention includes: a lens main body having multiple lens portions on one surface side and having multiple detectable portions on the other surface side. The lens portions are arranged successively in a planar two-dimensional direction, and on the one surface, a pitch of the lens portions in a one-dimensional direction is narrower than a pitch of the lens portions in the other one-dimensional direction.

### Advantageous Effects of Invention

The marker of the present invention can prevent reflection from the surface of the marker and can project an image with an excellent contrast by setting the pitch as mentioned above.

### BRIEF DESCRIPTION OF DRAWINGS

FIGs. 1A to 1D are schematic views illustrating an example marker according to the first embodiment. FIG. 1A is a top view of the marker. FIG. 1B is a perspective view of the marker. FIG. 1C is a cross-sectional view of the marker as viewed in the direction of line I-I in FIG. 1A. FIG. 1D is a cross-sectional view of the marker as viewed in the direction of line II-II in FIG. 1A.
FIGs. 2A to 2D are schematic views illustrating examples of detectable portions in the marker according to the first embodiment. FIG. 2A is a top view of the marker. FIG. 2B is a bottom view of the marker. FIG. 1C is a cross-sectional view of the marker as viewed in the direction of line I-I in FIG. 1A. FIG. 1D is a cross-sectional view of the marker as viewed in the direction of line II-II in FIG. 1A.
FIG. 3 is a cross-sectional view illustrating an example of the lens portion and an example of the detectable portion in the marker according to the first embodiment.
FIG. 4 is a top view illustrating another example of a shape of lens portions in the marker according to the first embodiment.
FIG. 5 illustrates simulation views of images projected on the markers of an example and the marker of a comparative example in Example 1.
FIG. 6 illustrates photographs for checking reflection from the marker of an example and the marker of a comparative example in Example 2.
FIGs. 7A to 7D are schematic views illustrating an example of a conventional marker. FIG. 7A is a top view of the marker. FIG. 7B is a perspective view of the marker. FIG. 7C is a cross-sectional view of the marker as viewed in the direction of line III-III in FIG. 7A. FIG. 2D is a cross-sectional view of the marker as viewed in the direction of line IV-IV in FIG. 7A.

### DESCRIPTION OF EMBODIMENTS

The marker of the present invention is configured such that, for example, a ratio of a pitch (Py) of the lens portions in the a one-dimensional direction to a pitch (Px) of the lens portions in the other one-dimensional direction is 0.2 or more and less than 1 assuming that the Px is 1.

The marker of the present invention is configured such that, for example, a shape of each of the lens portions is at least one shape selected from the group consisting of a spherical shape and an aspherical shape.

The marker of the present invention is configured such that, for example, a shape of each of the lens portions is a toroidal shape.

The marker of the present invention is configured such that, for example, an array of the lens portions is at least one selected from the group consisting of a rectangular array, a honeycomb array, and a radial array.

The marker of the present invention is configured such that, for example, the lens main body has multiple recesses on the other surface side, and colored films as the detectable portions are provided inside the respective recesses.

The marker of the present invention is configured such that, for example, the lens main body is an integrally molded article of multiple lens units having the respective lens portions.

The marker of the present invention may be configured such that, for example, the lens main body is an injection molded article.

Next, embodiments of the present invention will be described with reference to the drawings. It is to be noted, however, that the present invention is by no means limited or restricted by the following embodiments. In the respective drawings, the same components/portions are given the same reference numerals. In the drawings, the structure of each component/portion may be shown in a simplified form as appropriate for convenience of illustration, and the dimension ratio and the like of each component/portion are not limited to the conditions shown in the drawings.

### [First Embodiment]

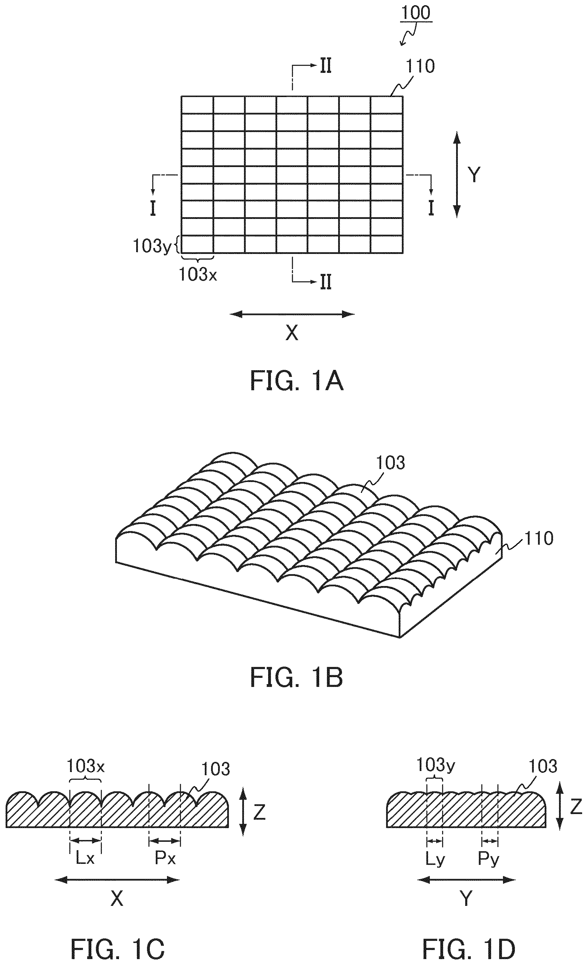

The first embodiment relates to an example of a marker of the present invention. FIGs. 1A to 1D illustrate an example of a marker according to the present embodiment. FIG. 1A is a top view of a marker 100. FIG. 1B is a perspective view of the marker 100. FIG. 1C is a cross-sectional view of the marker 100 as viewed in the direction of line I-I in FIG. 1A. FIG. 1D is a cross-sectional view of the marker 100 as viewed in the direction of line II-II in FIG. 1A.

As shown in FIGs. 1A to 1D, the marker 100 includes a lens main body 110. The lens main body 110 includes multiple lens portions 103, and the lens portions 103 are arranged successively in a planar two-dimensional direction (X direction and Y direction). For convenience of explanation, in the drawings, the X direction is referred to as a rotation direction or a length direction, the Y direction is referred to as a width direction perpendicular to the X direction in a planar direction, and the Z direction is referred to as a thickness direction perpendicular to the X direction and the Y direction. The rotation direction is, for example, a direction for rotational movement relative to the viewing side and is a direction for moving an image appearing on the surface of the lens main body 110. In the present invention, as in the modification of the first embodiment to be described below, the X direction may be the width direction, and the Y direction may be the rotation direction or the length direction. However, for example, from the viewpoint of recognizing an angle variation in a wide range and improving accuracy, the X direction is preferably the rotation direction or the length direction, and the Y direction is preferably the width direction.

In the lens main body 110, multiple lens portions 103 are successively arranged in a planar two-dimensional direction. Thus, the lens main body 110 is also referred to as, for example, a lens array.

The lens main body 110 has light-condensing lens portions 103 on one surface side of the lens main body 110, i.e., on the side of a surface located upward (upper surface) in FIGs. 1A to 1D. The lens main body 110 includes multiple detectable portions on the other surface side of the lens main body 110, i.e., on the side of a surface located downward (lower surface or rear surface) in FIGs 1A to 1D. The position and the shape of each detectable portion are not particularly limited and will be shown below as examples.

In the present invention, the light-condensing lens portion means a surface having a function of condensing light (light-condensing function). Each lens portion needs only to have this function, and the shape thereof is not particularly limited. The shape of each lens portion 103 in the marker 100 shown in FIGs. 1A to 1D is a spherical shape (also referred to as an R shape). Specifically, the surface of each lens portion 103 has a convex curved surface. The shape of the surface of the lens portion 103 means, for example, a surface shape in a cross section taken in the thickness direction Z.

In the lens main body 110, the lens portions 103 arranged successively in a planar two-dimensional direction satisfy the following condition 1:
Condition 1: the pitch (Py) in a one-dimensional direction (i.e., the Y direction which is the width direction) is narrower than the pitch (Px) in the other one-dimensional direction (i.e., the X direction which is the rotation direction).

The marker of the present invention is configured such that it satisfies the condition 1 and thus can prevent reflection and improve contrast as mentioned above.

In the condition 1, as the ratio of the pitch in the width direction (Y direction) to the pitch in the rotation direction (X direction), Py is 0.2 or more and less than 1 or is 0.2 or more and 0.8 or less assuming that Px is 1, for example.

In the present invention, the "pitch of the lens portions" means the pitch between adjacent lens portions in each of a one-dimensional directions (Y direction) and the other one-dimensional direction (X direction). The pitch between each adjacent pair of lens portions may be the same or different in the range of satisfying the condition 1 and is preferably the same.

The pitch of adjacent lens portions is, for example, a distance between apexes of adjacent lens portions 103. The apex of the lens portion 103 is, for example, the highest position in the thickness direction. The pitch (Px) of adjacent lens portions 103 in the X direction is, for example, the same as the length (Lx) of each lens portion 103 in the X direction. The pitch (Py) of adjacent lens portions 103 in the Y direction is, for example, the same as the length (Ly) of each lens portion 103 in the Y direction.

The pitch (Px) between adjacent lens portions 103 in the X direction is, for example, 0.1 to 1 mm. The size of a gap between adjacent lens portions 103 in the Y direction is not particularly limited and is, for example, half or less of the resolution of an optical detection device such as a camera.

The size of each lens portion 103 is not particularly limited and can be determined as appropriate depending on the number of lens portions 103, the intended use of the marker 100, and the like, for example. The length (Lx) of each lens portion 103 in the X direction is, for example, 5 to 150 mm, and the length (Ly) of each lens portion 103 in the Y direction is, for example, 5 to 150 mm. The lens thickness of the lens main body 110, i.e., the thickness passing through the apex of the lens portion 103 is, for example, 0.1 to 10 mm.

The lens portion 103 needs only be capable of condensing light, and for example, the curvature of the curved surface is not particularly limited. The curvature of the convex surface of the lens portion 103 in the X direction may be the same as or different from, for example, and is preferably the same as that in the Y direction. In the lens portion 103, the radius of curvature (R) of the curved surface in the cross section taken in the thickness direction increases from the apex of the lens portion 103 toward the lens portions 103 adjacent thereto, for example. The radius of curvature (R) may increase either continuously or intermittently, for example. The radius of curvature at the apex of the lens portion 103 is, for example, 0.1 to 10 mm in each of the X direction and the Y direction.

On the upper surface side of the lens main body 110, for example, the shape and size of the surface (also referred to as a lens surface) of each lens portion 103 are the same in every direction of the plane. Specifically, for example, the shape and size of the surface of each lens portion 103 are the same in the X direction, and the shape and size of the surface are the same in the Y direction. In the present invention, the meaning of the term "same" encompasses, for example, not only exactly the same but also substantially the same as long as an equivalent function is exhibited. For manufacturing reasons, the lens main body 110 may include, for example, a lens that does not satisfy the condition 1 in the vicinity of the outer periphery.

The lens main body 110 may be formed, for example, by separately preparing lens units each having a lens portion 103 and connecting the lens units or may be an integrally molded article having lens units 103 on its surface. The lens main body 110 is, for example, an injection molded article. In particular, when the lens main body 110 is the above-described integrally molded article, it is preferable that the lens main body 110 is an injection molded article.

The method of forming the lens portions 103, in particular, the lens surface in the lens main body 110 is not particularly limited, and, for example, precision machining (extreme machining), cutting by a machining center or the like, laser machining using a fiber laser, electric discharge machining, electrolytic machining, etching machining, photomask machining, or the like can be employed. Further, for example, the surface of each lens unit 103 in the lens main body 110 may be further subjected to lapping, polishing, blasting, or the like.

The lens main body 110 is, for example, a light-transmitting member. The light-transmitting member is not particularly limited, and may be formed of a resin, glass, or the like, for example. The resin may be, for example, an acrylic resin such as a polycarbonate and polymethyl methacrylate (PMMA), a cycloolefin polymer (COP), a cycloolefin copolymer (COC), or the like.

Although FIGs. 1A to 1D show an example where the number of lens portions 103 in the lens main body 110 is seven in each of the X direction and nine in the Y direction, the present invention is not limited to this illustrative example. The number of lens portions 103 in the lens main body 110 is not particularly limited and is, for example, 20 to 250 in the X direction (rotation direction) and is, for example, 19 to 249, 4 to 50 in the Y direction (width direction).

The size of the marker 100 is not particularly limited, and can be determined as appropriate depending on the number of the lens portions 103, the intended use of the marker 100, and the like, for example.

As mentioned above, the lens main body 110 has multiple detectable portions (not shown in FIGs. 1A to 1D) on the other surface side of the lens main body 110, i.e., on the side of the surface located downward (lower surface) in FIGs. 1A to 1D. The shape of each detectable portion is not particularly limited, and examples thereof include a linear shape, a dot shape, and the like.

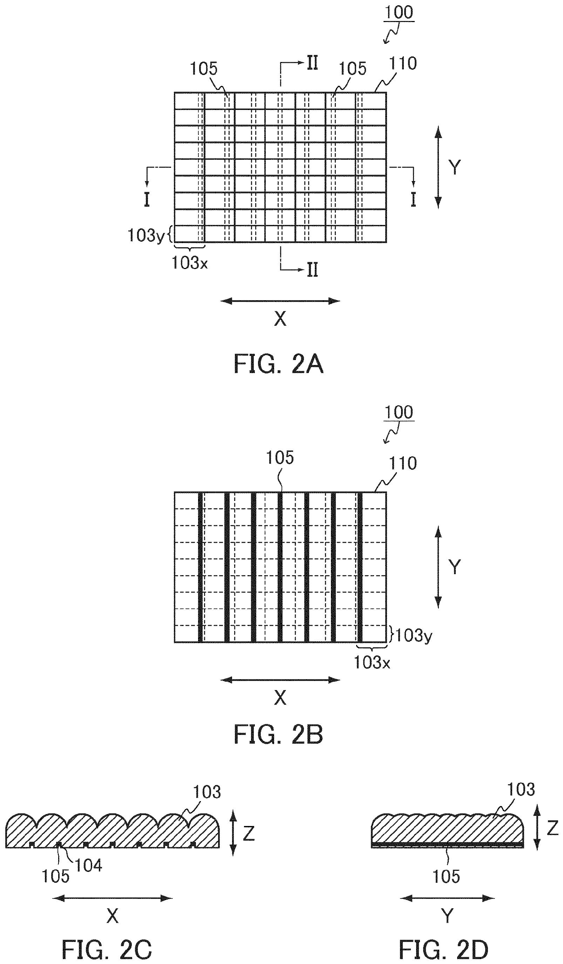

In the case of the linear detectable portions, for example, the multiple detectable portions can be in an aspect in which they are arranged in parallel along the Y direction in the lens main body 110. The aspect where the multiple detectable portions are arranged in parallel is shown in FIGs. 2A to 2D. FIGs. 2A to 2D are schematic views illustrating an example array of detectable portions in the lens main body 110. FIG. 2A is a top view of a marker 100 as in FIG. 1A. FIG. 2B is a bottom view of the marker 100. FIG. 1C is a cross-sectional view of the marker 100 as viewed in the direction of line I-I in FIG. 2A. As shown in FIGs 2A to 2D, the detectable portions 105 are lines that extend along the Y direction of the lens main body 110, and a stripe pattern is formed by the lines. The detectable portions 105 are projected on the upper surface side of the lens main body 110 as optically detectable images and can be detected optically, for example.

The detectable portions 105 are arranged such that, for example, they are located on the inner side of the lens main body 110 relative to the exposed surface of the other surface (lower surface) of the lens main body 110. Specifically, as shown in FIGs. 2B to 2D, for example, the other surface of the lens main body 110 has recesses 104, and the detectable portions 105 are arranged in the respective recesses 104.

In the lens main body 110, the size, the shape, and the like of each recess 104 can be set, as appropriate, according to each detectable portion 105, for example. The depth of each recess 104, i.e., the length of the inside of each recess 104 in the thickness direction Z is not particularly limited and is, for example, 5 to 30 µm.

The length of each detectable portion 105 in the X direction is not particularly limited and is, for example, 20 to 50 µm, and the length of each detectable portion 105 in the thickness direction Z (thickness) is not particularly limited and is, for example 1 to 10 µm. The thickness of each detectable portion 105 is, for example, shorter than the depth of each recess 104. In this case, it can be said that the surface of each detectable portion 105 on the upper side is located on the inner side of the lens main body 110 relative to the exposed surface of the other surface (lower surface) of the lens main body 110, for example.

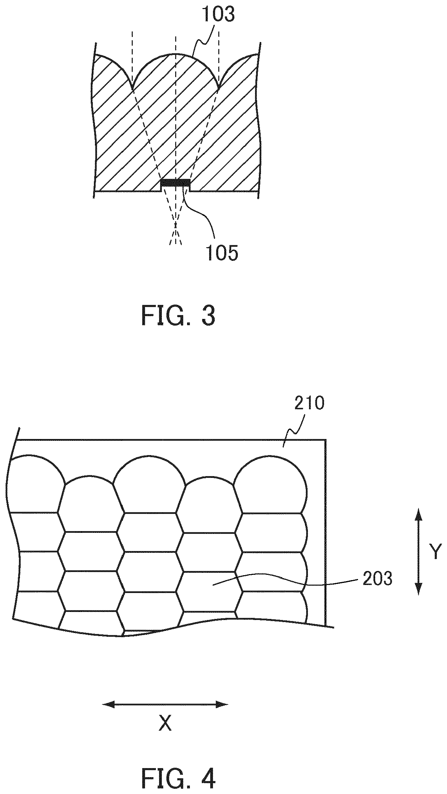

In the lens main body 110, the position of the detectable portion 105 in the thickness direction is not particularly limited. Each detectable portion 105 is arranged above the focal point of each lens portion 103 (on the upper surface side of each lens portion 103) in the thickness position (Z direction), for example. A schematic view of FIG. 3 shows this configuration. FIG. 3 shows a lens main body 110 in the marker 100 of FIGs. 1A to 1D and is a cross-sectional view of only one lens unit 103 in the X direction. As shown in FIG. 3, light entering from the lens portion 103 is indicated by dotted lines, and when a point of intersection of the dotted line is a focal point, the detectable portion 105 can be configured such that it is arranged above the focal point of the lens portion 103 in the thickness direction.

The width of the detectable portion 105 can be determined as appropriate depending on the pitch between adjacent lens portions 103, for example. In the X direction (rotation direction), the ratio between the width of each detectable portion 105 and the width of the pitch between lens portions 103 is, for example, 1 : 200 to 1 : 5. By setting the width of the detectable portion 105 so as to be relatively larger than the pitch between the lens portions 103, a detected image can have relatively higher contrast, for example. On the other hand, by setting the width of the detectable portion 105 so as to be relatively smaller than the pitch between the lens portions 103, the detectable portions can be detected with further improved sensitivity, for example.

In the present invention, the "pitch of the multiple detectable portions" means the pitch between adjacent detectable portions 105. In the detectable portions 105, the pitch between each adjacent pair of detectable portions 105 may be the same or different, and preferably is the same. In the marker 100, for example, the "pitch of the multiple detectable portions" in the Y direction may be the same as or different from and is preferably different from the "pitch of the multiple lens portions" in the Y direction.

The pitch between adjacent detectable portions 105 is, for example, the distance between the centers of the adjacent detectable portions 105 in the X direction. The center of the detectable portion 105 is, for example, a midpoint in the X direction and also a midpoint in the Y direction.

The distance between the adjacent detectable portions 105 is, for example, different from the width of the lens portion 103. The distance between the adjacent detectable portions 105 may be shorter than the width of the lens portion 103, or may be longer than the width of the lens portion 103, for example.

The detectable portion 105 needs only be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical-polymerizable compound or the like) in the coating material, baking of the powder coating material, or the like.

The detectable portions 105 need only be optically distinguishable, for example. The term "optically distinguishable" means that, for example, the detectable portions 105 can be detected with an optically significant difference as compared with regions other than the detectable portions 105. The term "optically significant difference" means that, for example, there is a significant difference with regard to optical characteristics. Examples of the optical characteristics include color properties such as lightness, saturation, and hue and the intensity of light such as luminance. The optically significant difference may be, for example, a difference that can be identified by visual observation or a difference that can be identified by an optical detection device such as a camera. When the detectable portions 105 emit fluorescence, for example, the optically significant difference may be a difference that can be identified by an operation such as light irradiation using a UV lamp.

The pattern formed by the detectable portions 105 is by no means limited. The linear detectable portions 105 shown in FIGs. 2A to 2D have, for example, a stripe pattern, which is a mere example. When the pattern is the above-described stripe pattern, the density of the color forming the stripe pattern may be uniform, or the stripe pattern may contain color gradations, for example.

Each detectable portion is not particularly limited and may have, for example, a dot shape. When the detectable portion has a dot shape, the pitch of the detectable portions in the X direction is not particularly limited and is, for example, the same as the pitch mentioned for the detectable portions 105 shown in FIGs. 2A to 2D. Moreover, the pitch of the detectable portions in the Y direction needs only be, for example, the pitch (Py) or less of the lens portions and is not particularly limited.

When the marker 100 is placed on, for example, a white object, among light rays that have entered from the upper surface of the lens main body 110 of the marker 100, the light rays that have reached the detectable portions are absorbed by the detectable portions (e.g., black colored films), and the other light rays pass through the lens main body 110 and are reflected from the surface of the object. Accordingly, on the upper surface of the lens main body 110, images of the detectable portions (e.g., black linear images in the case of linear detectable portions 105 shown in FIGs. 2A to 2D) are projected onto a white background.

The marker 100 is, for example, arranged on a substrate. The substrate is not particularly limited, and may be formed of a resin member, a glass member, or the like, for example. The surface of the substrate on the lens main body 110 side preferably has a color by which colors of the detectable portions in the lens main body 110 can be optically distinguished, for example. Specifically, when the color of each detectable portion is black as mentioned above, the color of the surface of the substrate on the lens main body 110 side is, for example, white. The surface of the substrate on the lens main body 110 side may or may not have a pattern, for example, and in the former case, the pattern preferably does not affect the detection of each detectable portion, and no pattern is more preferable. The substrate can also be referred to as a reflector, for example.

The resin member may be, for example, a polycarbonate, an acrylic resin such as polymethyl methacrylate (PMMA), a cycloolefin polymer (COP), a cycloolefin copolymer (COC), or the like. The surface of the substrate on the lens main body 110 side may be colored by molding a substrate of a colored resin or glass or by molding a substrate of a colorless resin or glass and thereafter coloring a surface of the substrate with a colorant, for example.

### [Modification of the first embodiment]

The modification of the first embodiment is another example of an array of multiple lens portions in the marker of the present invention in the two-dimensional direction. In the marker of the present invention, the lens portions 103 arranged successively in a planar two-dimensional direction may satisfy the following condition 2:
Condition 2: the pitch (Py) in a one-dimensional direction (i.e., the Y direction which is the rotation direction) is narrower than the pitch (Px) in the other one-dimensional direction (i.e., the X direction which is the width direction).

### [Second Embodiment]

The second embodiment is an another example of the shape of each lens portion in the marker of the present invention. In the marker of the present invention, the shape of the lens portion is not particularly limited as mentioned above, and the lens portion needs only be capable of condensing light and arranged successively so as to satisfy the following condition 1.

Examples of the shape of the lens portion include, in addition to a spherical shape shown in the first embodiment as an example, an aspherical shape and the like. The shape of the lens portion can also be, for example, a toroidal shape. The toroidal shape refers to, for example, a shape having different curvatures in the cross-sectional direction (Z direction) of the axis in two orthogonal axes. It should be noted that the two orthogonal axes are not particularly limited, for example, may be axes in the X direction and the Y direction, or otherwise encompass axes that are optionally rotated on the same plane in the respective directions, such as an axis rotated at a predetermined angle (e.g., 45°) from the X direction on the same plane or an axis rotated at a predetermined angle (e.g., 45°) from the Y direction on the same plane.

An array of the lens portions is not particularly limited, and may be, for example, a rectangular array as shown in FIGs. 1A to 1D or can be a honeycomb array, a radial array, or the like. An example where the array of the lens portions is a honeycomb array is shown in the schematic view of FIG. 4. FIG. 4 is a plan view partially showing the lens main body 210 as in FIG. 1A. In FIG. 4, multiple lens portions 203 are arranged to form a honeycomb array under the condition where the pitch in the Y direction is smaller than that in the X direction.

In the marker of the present invention, the size of each portion is not particularly limited. In the marker of the present invention, the size of each portion can be set as appropriate by, for example, setting the size of the lens portions.

The marker of the present invention may be, for example, a marker set obtained by combining the marker with a two-dimensional pattern code. That is, the marker set of the present invention includes the marker of the present invention and a two-dimensional pattern code.

A two-dimensional pattern code is not particularly limited, and may be, for example, an AR marker, a QR marker, or the like. Examples of the AR marker include ARToolKit, ARTag, CyberCode, and ARToolKit Plus. The two-dimensional pattern code may be arranged on the above-mentioned substrate together with the marker of the present invention, for example.

### Examples

### [Example 1]

Images projected on the lens main bodies of markers of an example and a marker of a comparative example are checked by simulation.

The markers of the example are markers 100 shown in FIGs. 1A to 1D and FIGs. 2A to 2D, and the conditions of the markers 100 are the following two kinds. The conditions of a marker 1 of the example are the same as those of a marker 2 of the example except that the pitch in the Y direction is different.

The ratio (Py : Px) between the pitch in the Y direction and the pitch in the X direction:
Py : Px = 0.5 : 1 in the marker 1 of the example
Py : Px = 0.3 : 1 in the marker 2 of the example
Shape of each lens portion: spherical shape
Array of lens portions: rectangular array
Shape of each detectable portion: linear shape
Method for molding lens main body: injection molding

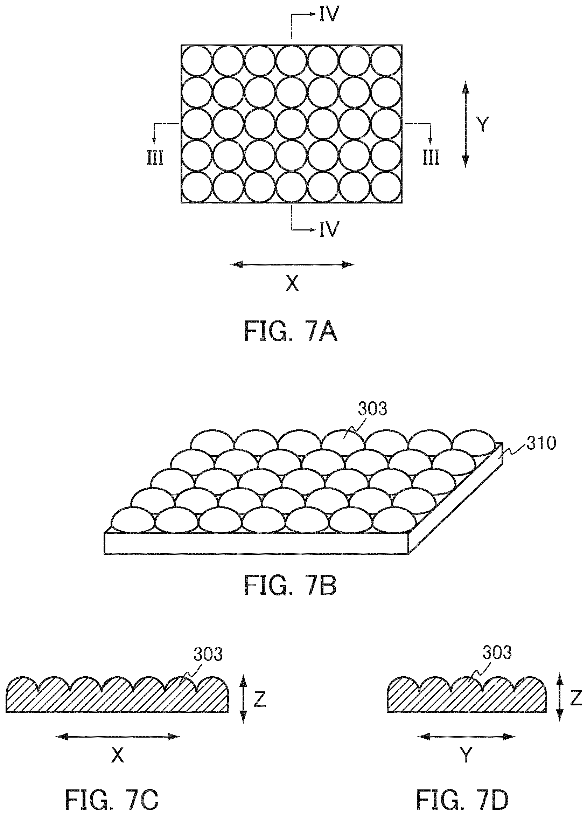

The overview of the marker of the comparative example is shown in FIGs. 7A to 7D. FIG. 7A is a top view of a marker 300. FIG. 7B is a perspective view of the marker 300. FIG. 7C is a cross-sectional view of the marker 300 as viewed in the direction of line III-III in FIG. 7A. FIG. 7D is a cross-sectional view of the marker 300 as viewed in the direction of line IV-IV in FIG. 7A. The marker 300 is the same as the markers 100 of the example except that in the lens main body 310, the pitch of lends portions 303 in the Y direction is the same as that in the X direction. The detectable portions in the marker 300 are the same as those in the markers 100 of the example although not shown.

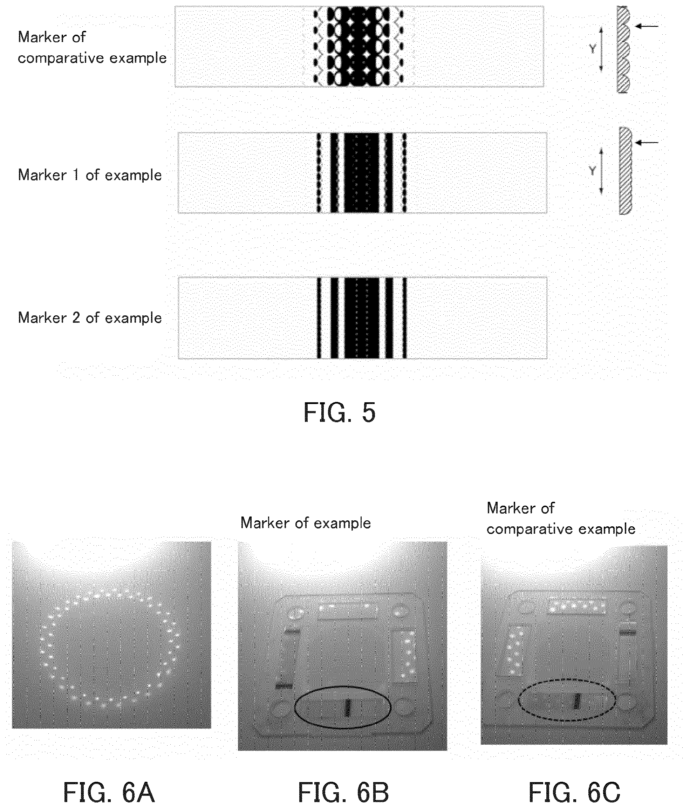

The markers 100 and the marker 300 were irradiated with light from the normal direction to the plane, and the states of the images projected on the lens portions 103 and 303 of the lens main bodies 110 and 310, which are detected by the camera, were simulated. Simulations were performed by assuming a camera with a resolution of 0.01 mm/pixel. The results of these are shown in FIG. 5. FIG. 5 shows schematic views illustrating virtual images projected on the respective markers. In FIG. 5, the left views illustrate simulation images on the respective markers, and right views are cross-sectional views of the respective markers in the Y direction (detectable portions are not shown).

As shown in FIG. 5, in the marker of the comparative example, a blank portion was generated in the black stripe, and there was a problem in contrast. In contrast, the markers 1 and 2 of the example showed clear black stripes, and the contrast was improved. Specifically, in the marker 2 of the example, the pitch in the Y direction was made narrower than that in the marker 1 of the example so that the R of the black stripes in the Y direction became inconspicuous, and the stripe pattern appeared clearer.

This is considered to be due to the following reasons. In the marker 300 of the comparative example, as shown in FIG. 7A, the lens portions 303 are arranged in a rectangular shape so as to have the same pitch in the X direction and the Y direction. The surface of each lens portion 303 has an R shape with the same curvature in the X direction and the Y direction. Therefore, the marker of the comparative example is in a state where the lens portions 303 are arranged in a state of being crowded, and a large gap is formed between the adjacent lens portions 303 in the Y direction, as indicated by an arrow in the cross-sectional view of FIG. 5. As shown in FIG. 5, it is considered that a blank portion is generated in the black stripe in the image of the marker of the comparative example because of this gap. In contrast, as shown in FIG. 1A, the markers 100 of the example are arranged in a rectangular shape so that the pitch in the Y direction is smaller than that in the X direction. The surface of each lens portion 103 has an R shape with the same curvature in the X direction and the Y direction. Therefore, in the marker of the example, the gap between the adj acent lens portions 103 in the Y direction is very small as indicated by the arrow in the cross-sectional view of FIG. 5. In this manner, since the markers of the example have a small gap, it is considered that the occurrence of a blank portion in a black stripe is prevented, and excellent contrast is obtained, as shown in FIG. 5, unlike the marker of the comparative example.

### [Example 2]

A markers 100 of the example and a marker 300 of the comparative example shown in Example 1 were produced, and reflection at the time of light irradiation was checked.

The results of these are shown in FIGs. 6A to 6C. Among FIGs. 6A to 6C, FIG. 6A is a photograph of external illumination light by LED ring illumination, FIG. 6B is a photograph showing a result of an image appearing when the marker of the example is irradiated with light by the LED rink illumination, and FIG. 6C is a photograph showing a result of an image appearing when the marker of the comparative example is irradiated with light by the LED ring illumination. The markers of the example and the marker of the comparative example were arranged on the same transparent substrate, and images at the same position were detected. That is, in FIGs. 6A to 6C, the marker was placed on a white table and irradiated with light so that the target marker was positioned at a front position.

As shown in FIG. 6A, when a white table was irradiated with LED ring illumination, reflected images of a plurality of light sources of the illumination appeared discontinuously in a circular shape. When the marker of the comparative example was disposed on the white table, reflection images of the light sources were confirmed in the marker of the comparative example surrounded by a dotted circle as shown in FIG. 6C. In contrast, when the markers of the example were arranged under the same conditions, as shown in FIG. 6B, the appearance of the reflection images of the light sources was prevented in the marker of the example surrounded by a solid line circle. That is, it can be said that according to the marker of example, the appearance of the reflection images of the light sources is prevented by weakening the specular reflection of the light emitted from the light sources (i.e., the specular reflection of is reduced).

### Industrial Applicability

As described above, the marker of the present invention can prevent reflection from the surface of the marker and can project an image with an excellent contrast by setting the pitch as mentioned above.

This application claims priority to Japanese Patent Application No. 2017-006091, filed on January 17, 2017, the entire disclosure of which is incorporated herein by reference.

### Reference Signs List

- 100, 300:: marker
- 110,210,310:: lens main body
- 103, 203, 303:: lens portion
- 104:: recess
- 105:: detectable portion

## Claims

1. A marker comprising
a lens main body having multiple lens portions on one surface side and having multiple detectable portions on the other surface side, wherein
the lens portions are arranged successively in a planar two-dimensional direction, and
on the one surface, a pitch of the lens portions in a one-dimensional direction is narrower than a pitch of the lens portions in the other one-dimensional direction.

2. The marker according to claim 1, wherein
a ratio of a pitch (Py) of the lens portions in the a one-dimensional direction to a pitch (Px) of the lens portions in the other one-dimensional direction is 0.2 or more and less than 1 assuming that the Px is 1.

3. The marker according to claim 1 or 2, wherein
a shape of each of the lens portions is at least one shape selected from the group consisting of a spherical shape and a spherical shape.

4. The marker according to any one of claims 1 to 3, wherein a shape of each of the lens portions is a toroidal shape.

5. The marker according to any one of claims 1 to 4, wherein
an array of the lens portions is at least one selected from the group consisting of a rectangular array, a honeycomb array, and a radial array.

6. The marker according to any one of claims 1 to 5, wherein
the lens main body comprises multiple recesses on the other surface side, and
colored films as the detectable portions are provided inside the respective recesses.

7. The marker according to any one of claims 1 to 6, wherein
the lens main body is an integrally molded article of multiple lens units comprising the respective lens portions.

8. The marker according to any one of claims 1 to 7, wherein the lens main body is an injection molded article.
